# EUROPÄISCHE PATENTSCHRIFT

(11) **EP 2 221 573 B1**
(45) Veröffentlichungstag und Bekanntmachung des Hinweises auf die Patenterteilung: **01.01.2014**
(21) Anmeldenummer: 10001373.9
(22) Anmeldetag: 11.02.2010
(51) Int. Cl.: F41H 7/03, G01N 1/02

(54) **Fernsteuerbare Spürradabwurf- und -wechselvorrichtung sowie Verwendung an einem Fahrzeug oder Objekt**
Remote controllable sampling wheel jettison and change device and use of same on a vehicle or building
Dispositif de largage et de remplacement de roue d'échantillonage télécommandable ainsi qu'utilisation sur un véhicule ou un objet

(30) Priorität: 21.02.2009 DE 102009010083
(43) Veröffentlichungstag der Anmeldung: 25.08.2010
(73) Patentinhaber: Rheinmetall Landsysteme GmbH, 29345 Unterlüß (DE)
(72) Erfinder: Gerlach, Klaus-Peter, 34302 Guxhagen (DE); Stulgies, Baldur, 34359 Reinhardshagen (DE); Bräutigam, Martin, 34117 Kassel (DE); Ludwig, Stefan, 34125 Kassel (DE)
(74) Vertreter: Dietrich, Barbara

(56) Entgegenhaltungen:
- DE-C1- 4 238 399
- DE-U1- 8 424 372
- DE-U1- 9 100 367
- DE-U1-202011 003 927

## Beschreibung

Die Erfindung betrifft eine fernsteuerbare, autark arbeitende Spürradabwurf- sowie Spürradwechselvorrichtung an einem Fahrzeug bzw. Objekt für den Einsatz in kontaminiertem Gelände.

Bekannt sind Spürfahrzeuge für das Aufspüren von nuklear, biologisch und / oder chemisch kontaminierter Luft und / oder Boden. Ein mit dem Namen "Fuchs" bekannter Spürpanzer der Anmelderin ist der Internetseite http://www.rheinmetall-detec.de/index.php?lang=2&fid=3358 entnehmbar. Derartige ABC (AB, AC, BC) -Spürfahrzeuge weisen am Heck des Fahrzeuges eine Radkonstruktion mit in der Regel zwei Spürrädern zum Aufsammeln von kontaminierten Bodenpartikeln auf, die dann angehoben, einer Sensoreinrichtung zugeführt werden. Im Radspürmodus werden die mit Silikon beschichteten Spürräder hinter dem fahrenden Fahrzeug hergezogen. Kontaminierte Spürräder müssen jedoch nach jeder Probenaufnahme gewechselt werden, um weitere Messungen vornehmen zu können. Dies erfolgt derzeit durch eine im Heck eingebundene Öffnung, aus der ein sogenannter Handschuhschlauch geführt ist, in die eine Person mit der linken Hand hineingreifen kann, um beispielsweise verseuchte Proben aufzunehmen. Damit verbunden ist ein gewisser Platzbedarf für die Person im Heckbereich, die in der Regel liegend die Arbeiten ausführt, was zudem zu einer anormalen Arbeitshaltung führt.

Im Bestreben leichter und kleinerer ABC-Fahrzeuge ist ein derartiger Platzvorrat jedoch nicht mehr realisierbar.

Aus der DE 42 38 399 C1 ist ein mobiles Massensprektrometer mit einer Prabenahmevorrichtung mit drehbarem Spürrad mit Metallfelge bekannt. Heckseitig an einem Fahrzeug ist ein Hand- und Armschutz eingebunden, mit Hilfe dessen eine Bedienperson im Fahrzeug kontaminationsfrel aus einem Vorratsbehälter frische Spürräder entnehmen und an einen der Spürradarme montieren kann.

Der Erfindung stellt sich die Aufgabe, eine Möglichkeit zu konzipieren, die nur noch ein geringes Maß an Platz bedarf.

Gelöst wird die Aufgabe durch die Merkmale des Patentanspruchs 1 sowie des Patentanspruchs 4. Vorteilhafte Ausführungen sind in den Unteransprüchen aufgezeigt, die insbesondere konstruktiv bevorzugte Einzelheiten widerspiegeln.

Der Erfindung liegt die Idee zugrunde, eine autark arbeitende Spürradabwurfvorrichtung aufzuzeigen, durch die es im zweiten Schritt möglich wird, eine gleichfalls autark funktionierende Spürradwechselvorrichtung zu schaffen. Dazu werden die Spürräder durch eine autark wirkende Mimik automatisch von der Radachse gelöst und abgeworfen und im zweiten Schritt dann gewechselt. Die autark wirkende Mimik muss somit die Räder lösen und arretieren können. Dies wäre in einer einfachsten Variante beispielsweise durch einen so genannten Kugelsperrbolzen oder dergleichen möglich. Das Entriegeln könnte beim Hochschwenken des Rades erfolgen, sodass das Rad dann frei auf der Achse liegt. In einer einfachsten Variante kann das Entriegeln beim Entlangführen des Rades an einer konstruktiv eingebundenen Kante des Fahrzeuges oder Objekts realisiert werden. Dadurch werden die beiden Kugeln, die das Rad auf der Achse halten, versenkt. Eine elektromagnetische Lösung oder dergleichen ist ebenfalls denkbar. Das freiliegende Rad kann dann entfernt, einfach fallengelassen oder aufgefangen werden.

Zur Realisierung des automatischen und fernbedienbaren Spürradabwurfs kann eine (bereits vorhandene oder eine weitere nachrüstbare) Fanggabel in eine Radwechselposition überführt werden. In dieser Stellung der Spürräder wird durch eine Vorrichtung das kontaminierte Spürrad abgeworfen oder von der Achse genommen und beispielsweise in einen Behälter gebracht. Diese Fanggabel ist vorzugsweise mittig zwischen den beiden Spürrädern angeordnet, die Spürräder selbst sind in diese Mittenposition verschwenkbar.

Zur Erfüllung der zweiten Aufgabe, nämlich des Aufsetzten eines neuen Spürrades, ist des Weiteren ein Spürradmagazin zu Bevorratung der nicht kontaminierten (Reserve- bzw. Wechsel-)Spürräder vorgesehen. Dieses Spürradmagazin wird von einer Wechselvorrichtung angelaufen, die Mittel besitzt, mit denen das Wechselspürrad gegriffen werden kann.

Die Wechselvorrichtung wird dazu vorzugsweise entlang einer Schiene geführt, um verschiedene Positionen bzw. Stationen anfahren zu können. Diese Stationen sind vorrangig: Spürradarm, Abwurfposition (bzw. Behälterposition) und Reservemagazin. Selbige Wechselvorrichtung kann auch zum Abnehmen des kontaminierten Spürrades genutzt werden.

Die Räder sind normiert und so im Magazin angeordnet, dass sie sich durch den Greifer aus dem Magazin heben und auf die leere Radachse des Spürradarmes aufsetzen lassen. Damit z. B. die Silikonbeschichtung des neuen Spürrades nicht berührt wird, kann die Greifeinrichtung beispielsweise ein Parallelgreifer sein (zangenartig), der an das Spürrad angreift und das Spürrad aus dem Magazin zieht. Um die Räder von oben greifen zu können, sollte der Greifer um eine Achse parallel zur Verfahrrichtung verschwenkt werden können. Die Backen des Greifers müssen sich soweit öffnen lassen, dass ein Umfassen des Rades möglich, die Zerstörung der Silikonschicht des Austauschrades und somit eine Kontaminierungsverschleppung ausgeschlossen werden.

Das Greifen wird bevorzugt motorisch und durch ein Programm gesteuert. Die Bedienung erfolgt über ein Display und / oder eine Bedieneinheit. Ein manuelles Steuern beispielsweise über eine Kamerasicht ist jedoch auch alternativ möglich. Eine Kamera ist zu Überwachungszwecken sowieso vorgesehen.

Spätestens mit dem Absetzen bzw. Wegführen des Spürradarms mit dem gewechselten Rad aus der Fanggabel wird das aufgesetzte Rad wieder arretiert.

Neben der Platzeinsparung im Fahrzeug zeichnet sich diese Konstruktion dadurch aus, dass der Radwechsel nunmehr automatisch ablaufen kann. Durchbrüche am Heck, die Leckageprobleme mit sich bringen können, entfallen. Des Weiteren wird der ballistische Schutz in diesem Bereich erhöht. Aus ergonomischen Gesichtspunkten ergibt sich eine bessere Arbeitsmöglichkeit für den Bediener. Dieser muss nicht mehr auf dem Boden des Fahrzeugs liegen und es kommt auch nicht mehr auf eine notwendige Armlänge des Bedieners an.

Im Zusammenhang mit der Funktionsfähigkeit der Spürräder zur eigentlichen Messung ist die Einbindung einer verstellbaren Sensor- / Sondeneinheit vorgesehen. Bisher musste zur Verstellung der Sondeneinheit (z. B. ein Massenspektrometer) eine mechanische Arretierung gelöst werden, um dann die Sonde in die gewünschte Position (Luftspüren, Radspüren) zu überführen. Danach wurde die Sonde wieder arretiert. Im Falle des Bodenspürens musste zudem die Sonde mit einem konstanten Bodenandruck zum Boden ausgerichtet werden.

Diese dreh- und schwenkbaren Sensor- / Sondeneinheit ersetzt die manuelle Handhabung und wird je nach Aufgabe in die entsprechenden Positionen gefahren. Zur Messung in der Radspürstellung wird die Sonde an das Spürrad verschwenkt, für das Positionieren der Fanggabel in die Radwechselstellung wieder in eine neutrale Stellung und für das Luft- oder Bodenspüren in die entsprechende Messposition gebracht.

Die Dreh- und Schwenkeinheit dient somit für das Positionieren der Sonden zum Punktspüren, Radspüren, für das Luftspüren und für das Temperaturspüren. Für das Punktspüren wird die Einheit bzw. die Luft- Bodensonde dicht an den Untergrund herangeführt und je nach Sensor- bzw. Sondentyp ein konstanter Anpressdruck aufgebracht. Vorteilig ist auch, dass nunmehr ein konstanter Bodenandruck besser erzeugt werden kann, wenn die Sonde zum Boden ausgerichtet wird. Für das Luftspüren wird die gleiche Sonde in einem Abstand zum Untergrund gebracht.

Mit diesen Maßnahmen wird ein multifunktionales Heck geschaffen. Die Sonde(n) kann automatisch in ihre Messpositionen ausgerichtet werden und auch der Spürradwechsel erfolgt wie das Positionieren und Absetzen der Sonde automatisch und ferngelenkt.

Ein weiterer Vorteil ergibt sich dadurch, dass die Anordnung der Spürräder am Heck nunmehr unabhängig der Zugänglichkeit eines Bedieners zu diesen Spürradarmen erfolgen kann. Auch die Anzahl der Spürradarme kann von zwei auf mehr erhöht werden. Hier ist ausschließlich die Konstruktion der dreh- und schwenkbaren Sondenhalterung auf die Anzahl abzustimmen und für die Wechselvorrichtung möglicherweise eine weitere Fanggabel vorzusehen.

Mit der vorliegenden Lösung wird nicht nur Platz im Fahrzeug eingespart, sondern der Bedienung des Fahrzeuges mehr Komfort geboten.

Anhand eines Ausführungsbeispiels mit Zeichnung soll die Erfindung näher erläutert werden.
Es zeigt:
- Fig. 1: die Grundstellung der Spürräder am Boden,
- Fig. 2: die Funktionsstellung beim Radspüren,
- Fig. 3a bis 3c: einen Funktionsablauf des Radwechsels,
- Fig. 4: eine dreh- und verschwenkbare Sondeneinheit.

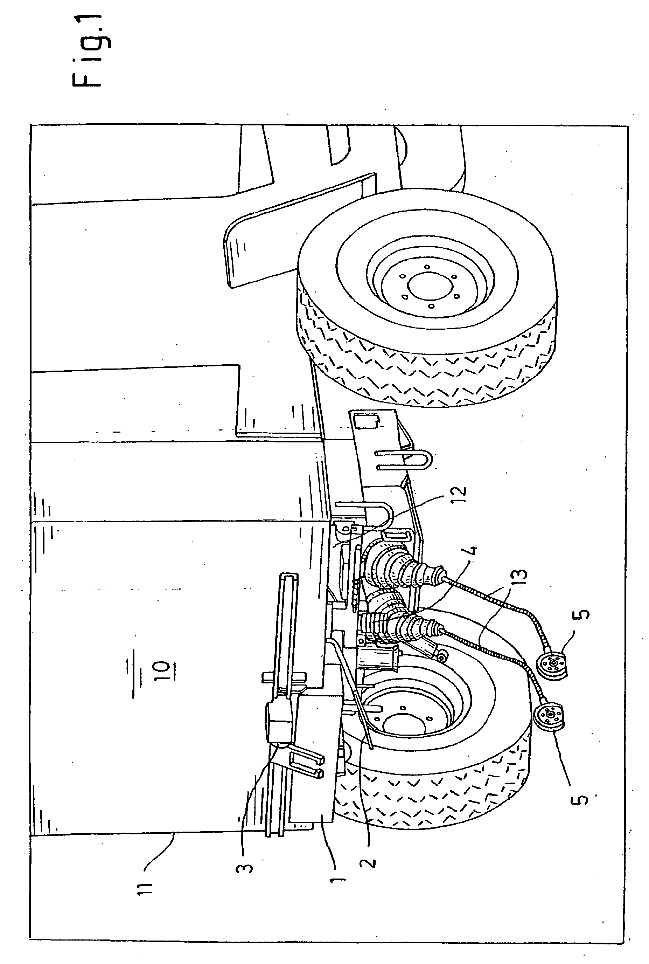

In Fig. 1 ist mit 1 ein Spürradmagazin am Heck 10 eines Fahrzeuges 11 zur Vorratslagerung von Wechsel-Spürrädern 5' bezeichnet. Eine Fanggabel 2 befindet sich in einer neutralen Position. Vorzugsweise oberhalb des Magazins 1 ist eine Radwechseleinheit 3, hier in Neutralposition dargestellt, angeordnet. Die Radwechseleinheit 3 ist vorzugsweise ein Greifer, insbesondere ein Parallelgreifer. Mit 4 gekennzeichnet ist eine Einheit, die Sensoren bzw. Sonden (nicht näher dargestellt) zur Messung der Kontaminationen (zumindest A und C) umfasst. Im vorliegenden Fall ist es ein Massenspektrometer, welches die Aufgaben der chemischen Kontaminationsmessung erfüllt. Die Sonde 4 befindet sich in einer Neutralposition, die Spürräder 5 in ihren Spürstellungen. Sie sind lösbar an einer Achse einer verschwenkbaren Spürradhalterung bzw. Spürradarm 13 befestigt.

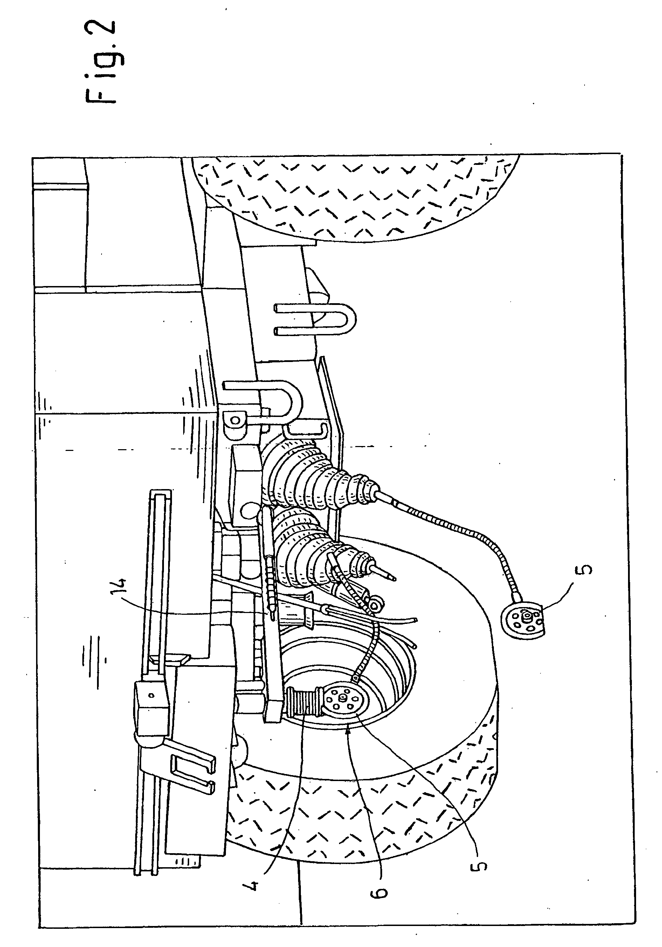

Fig. 2 zeigt die Funktion des Radspürens. Die Fanggabel 2 als auch die Sonde 4 befinden sich in der sogenannten Radspürposition. Das eine Spürrad 5 ist in die Sonden- bzw. Radspürstellung 6 überführt, das andere in der Spürstellung verblieben. Zum Verschwenken der Sonde 4 von der Neutralposition in die Radspürposition ist diese vorzugsweise als Dreh- und am Schwenkeinheit 14 ausgeführt. In der Neutralstellung kann sich die Einheit 4 direkt bzw. in einer Ausnehmung 12 am Heck 10 befinden. Die Sonde 4 wird im Radspürmodus an das Spürrad 5 in der Radspürstellung 6 verbracht, die Messung erfolgt herkömmlich.

Zum Wechseln des kontaminierten Spürrades 5 wird die Fanggabel 2 in die Radwechselposition 15 überführt, d.h. hoch geschwenkt und arretiert. Dies kann gleich nach dem Messen oder zu einem späteren Zeitpunkt erfolgen. Der Spürradarm 13 mit dem zu wechselnden Spürrad 5 gelangt dabei entweder zusammen mit der Fanggabel 2 in die Radwechselposition oder kann individuell durch Verschwenken des Spürradarmes 13 separat in diese Position gelangen.

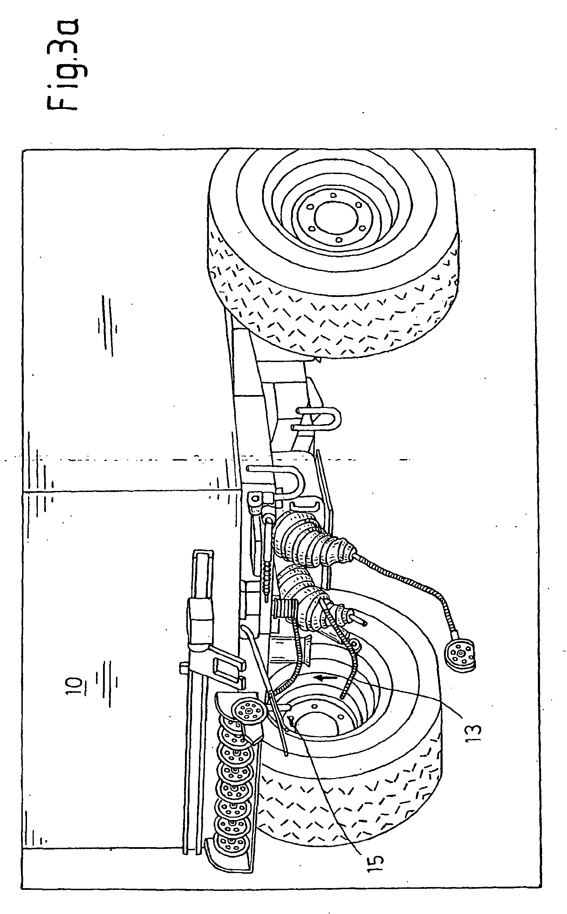

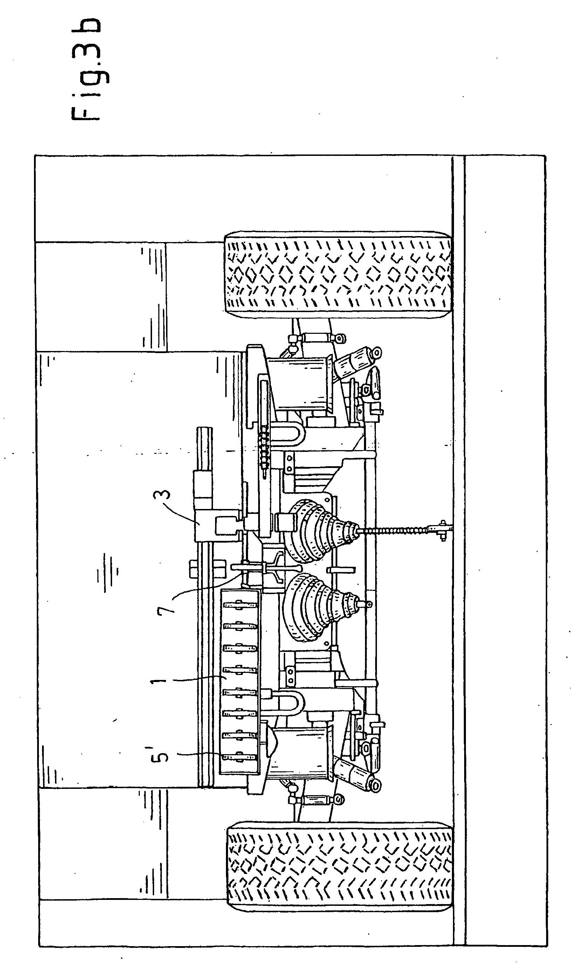

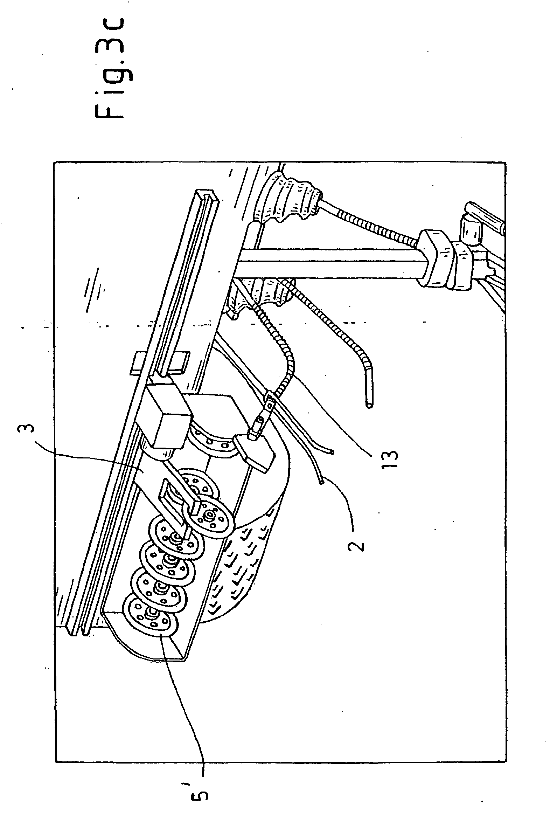

Beispielsweise beim Hochschwenken des Rades 5 wird dann ein Kugelsperrbolzen 7 (Fig. 3b) oder dergleichen an der Kante (beispielsweise ein abgeschrägtes Blech) des Spürradmagazins 1 entriegelt, wodurch die beiden Kugeln, die das Spürrad 5 sonst auf der Achse festhalten, versenkt werden und das Rad 5 frei auf der Achse des Spürradarmes 13 liegt. Der Greifer 8 positioniert sich über dem Spürrad 5, schwenkt ab und greift das Rad 5 vorzugsweise an seiner Felge. Anschließend zieht er das kontaminierte Rad 5 von der Achse und lässt es in der einfachsten Ausführung fallen. Alternativ kann das Rad 5 auch in einem Behälter am Heck 10 aufgefangen werden (nicht näher dargestellt).

Zum Aufsetzen eines neuen Rades 5' aus dem zum Wechsel geöffneten Spürradmagazin 1 wird der Greifer 3 über diesem Magazin 1 so positioniert, dass dieser vorzugsweise das nächstliegende Spürrad 5' greifen kann, wobei die Greiferbacken vorzugsweise um das Rad 5' an die Felge angreifen, ohne die auf der Radoberfläche des Spürrades 5' befindliche Silikonschicht zu zerstören, und es aus dem Magazin 1 heben kann. Danach wird der Greifer 3 soweit verschoben bzw. verfahren (erste Verfahrrichtung), bis sich Rad 5' und Greifer 3 oberhalb der Achse des Spürradarmes 13 befinden und der Greifer 3 abgesenkt, bis Radnabe des Rades 5' und Spürrradachse fluchtend in einer Ebene liegen. Das neue Rad 5' wird dann auf die Radachse geschoben, wozu der Greifer 3 wieder entgegen seiner ersten Verfahrrichtung verfahren wird. Die Greiferbacken des Greifers 3 werden nunmehr auseinander gefahren und dieser wieder in seine Neutralposition überführt. Wenn sich der Spürradarm 13 wieder senkt, entfällt der Druck auf den Auslösemechanismus des Kugelsperrbolzens 7, das neue Spürrad 5' ist arretiert.

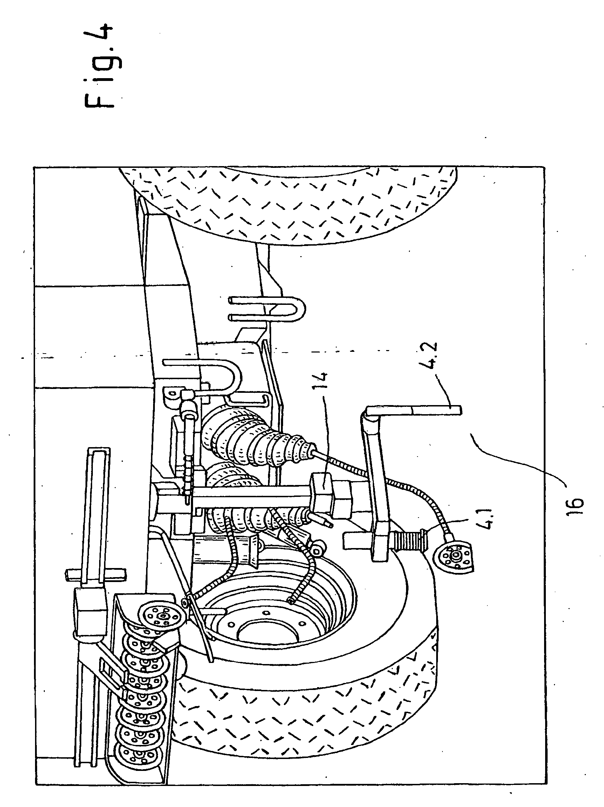

Die Dreh- und Schwenkeinrichtung 14 der Sonde 4 kann auch dafür genutzt werden, dass die Sonde 4 bzw. der Sondenkopf 4.1 in die einzelnen Positionen zum Punktspüren, für das Luftspüren sowie für das Temperaturspüren überführt wird (Fig. 4).

Die Dreh- und Schwenkeinrichtung 14 lässt sich in drei unterschiedlichen und unabhängig voneinander beweglichen Freiheitsgraden verstellen. Die Höhenverstellung geschieht durch eine Linearführung, mit der vier Betriebszustände angefahren werden können:
1. Fahrt ohne Messung (Transportstellung bzw. Neutralposition)
2. Luftspüren (während der Fahrt und im Stand)
3. Großflächiges C-Bodenspüren (während der Fahrt)
4. Punktspüren (im Stand).

In der Transportstellung ist der Sondenkopf 4.1 einer Luft-Bodensonde in der obersten Position eingezogen. Zum Luftspüren verlässt der Sondenkopf 4.1 den Heckanbau, sodass die Umgebungsluft den Sondenkopf 4.1 ohne Beeinträchtigung erreichen kann. Zum großflächigen Bodenspüren wird der Sondenkopf 4.1 in etwa auf halbe Höhe herabgelassen. In dieser Stellung (Radspüren) kann die Sonde 4 beim Einsatz der Spürräder 5 von beiden mittig angefahren werden. Zum Punktspüren wird die Sonde 4.2 (Bodentemperatursensor) bis auf den Boden ausgefahren und auf diesen aufgesetzt. Prinzipiell kann die Sonde 4.2 vor dem Aufsetzen über horizontale Verstellmöglichkeiten parallel zum Boden verschoben werden. Die Bewegung des Sondenkopfes 4.1 in der Ebene parallel zum Boden geschieht durch eine Rotation um die z-Achse, wobei zusätzlich der Abstand von der z-Achse geändert werden kann. Durch die Kombination dieser beiden Bewegungen kann die Sonde 4 an jedem Ort innerhalb einer Fläche, beispielsweise bis zu 1m², senkrecht auf den Boden 16 aufgesetzt werden, ohne dass das Fahrzeug selbst dazu bewegt werden muss. Gesteuert werden kann die Sondenbewegung aus dem Fahrzeug 11 oder Objekt heraus von verschiedenen Bedienplätzen. So zum Beispiel vom Arbeitsplatzrechner des Kommandanten oder vom Spürer.

Eine gute Einsicht auf das zu untersuchende Gebiet und die Sonde 4 sowie die Radwechslung selbst wird durch wenigstens eine Kamera, bevorzugt zwei, unterstützt. Der Anpressdruck des Sondenkopfes 4.1 auf den Boden kann vom Benutzer reguliert und durch das System überwacht werden.

Am der Sonde 4 gegenüberliegenden Ende der Quertraverse kann des Weiteren ein Bodentemperatursensor angebracht sein. Für eine Messung der Bodentemperatur wird die Verstelleinrichtung 14 in die unterste Position, knapp über das Bodenniveau gefahren und der Sensor mit einer geeigneten Vorrichtung weiter abgesenkt. Wenn der Kontakt mit dem Boden ausreichend ist, beendet beispielsweise ein integrierter Endschalter den Absenkvorgang.

## Patentansprüche

1. Spürradabwurfsystem mit einem Spürradarm (13), einer am Spürradarm (13) angebrachten Achse und einem arretierbar und lösbar auf der Achse angebrachten Spürrad (5) sowie einer Spürradabwurfvorrichtung, **dadurch gekennzeichnet, dass** die Spürradabwurfvorrichtung Mittel (7) aufweist, die eine autark arbeitende Mimik zur automatischen Arretierung und Lösung des Spürrades (5) aufweist und dass mittels der Mimik das Spürrad (5) automatisch am Spürradarm (13) arretiert sowie automatisch vom Spürradarm (13) gelöst und abgeworfen werden kann.

2. Spürradabwurfsystem nach Anspruch 1, **dadurch gekennzeichnet, dass** das Mittel (7) ein Kugelsperrbolzen ist.

3. Spürradabwurf system nach Anspruch 1, **dadurch gekennzeichnet, dass** das Mittel (7) ein magnetisch / elektromagnetisch ausgelöstes Schalt- bzw. Druckmittel ist.

4. Spürradwechselvorrichtung mit einer Spürradabwurfvorrichtung nach einem der Ansprüche 1 bis 3, **gekennzeichnet durch**
- ein Wechselmagazin (1) mit Wechselspürrädern (5) sowie
- eine Rad-Wechseleinheit (3), die mit dem Wechselmagazin (1) und den Spürrädern (5) funktional zusammenwirkt, derart, dass **durch** die Rad-Wechseleinheit (3) das Wechselrad (5) dem Wechselmagazin (1) entnommen und auf die Achse des Spürradarmes (13) aufgesetzt wird, wobei
- das Entriegeln des Spürrades (5) von der Achse des Spürradarmes (13) beim Hochschwenken des Spürrades (5) zum Abnehmen des Spürrades (5) und das Arretieren des neuen Spürrades (5) spätestens beim Absenken erfolgt.

5. Spürradwechselvorrichtung nach Anspruch 4, **dadurch gekennzeichnet, dass** die Rad-Wechseleinheit (3) ein Greifer ist, dessen Backen zueinander verstellbar sind, sodass diese an die Felge des Spürrades (5) im Wechselmagazin (1) angreifen können.

6. Spürradwechselvorrichtung nach Anspruch 4 oder 5, **dadurch gekennzeichnet, dass** eine Fanggabel (2) zum Halten des Spürradarmes (13) in einer Radwechselposition eingebunden ist.

7. Spürradwechselvorrichtung nach Anspruch 6, **dadurch gekennzeichnet, dass** die Fanggabel (2) vorzugsweise mittig zwischen den beiden Spürrädern (5) angeordnet ist und die Spürräder (5) selbst in diese Mittenposition verschwenkbar sind.

8. Spürradwechselvorrichtung nach einem der Ansprüche 4 bis 6, **dadurch gekennzeichnet, dass** die Anzahl der Spürradarme (13) von zwei auf mehr erhöht werden kann.

9. Spürradwechselvorrichtung nach einem der Ansprüche 4 bis 8, **dadurch gekennzeichnet, dass** das Spürradmagazin (1) eine Kante aufweist, an der beim Hochschwenken des Spürrades (5) der Kugelsperrbolzen (7) entriegelt wird, wodurch die beiden Kugeln, die das Spürrad (5) sonst auf der Achse festhalten, versenkt werden und das Spürrad (5) frei auf der Achse des Spürradarmes (13) liegt.

10. Spürradwechselvorrichtung nach einem der Ansprüche 4 bis 9, **dadurch gekennzeichnet, dass**, wenn sich der Spürradarm (13) wieder senkt, der Druck auf den Auslösemechanismus des Kugelsperrbolzens (7) entfällt und das neue Spürrad (5') arretiert ist.

11. Spürradwechselvorrichtung nach einem der Ansprüche 4 bis 10, **dadurch gekennzeichnet, dass** das Wechselmagazin (1) einen auf- bzw. abklappbaren Deckel besitzt.

12. Objekt oder Fahrzeug (11) mit einer Spürradabwurfvorrichtung nach einem der Ansprüche 1 bis 3 sowie einer Spürradwechselvorrichtung nach einem der Ansprüche 4 bis 11.

## Claims

1. Sensing wheel jettison system having a sensing wheel arm (13), an axle attached to the sensing wheel arm (13) and a sensing wheel (5) fixed lockably and detachably on the axle and a sensing wheel jettison device, **characterized in that** the sensing wheel jettison device has means (7) which has an autarkically operating mimic system for automatic locking and detachment of the sensing wheel (5) and that by means of the mimic system the sensing wheel (5) can be automatically locked on the sensing wheel arm (13) and can be automatically detached and jettisoned from the sensing wheel arm (13).

2. Sensing wheel jettison system according to Claim 1, **characterized in that** the means (7) is a ball lock pin.

3. Sensing wheel jettison system according to Claim 1, **characterized in that** the means (7) is a magnetically/electromagnetically triggered shifting or pressure means.

4. Sensing wheel changer device with a sensing wheel jettison device according to one of Claims 1 to 3, **characterized by**
- a changer magazine (1) with exchange sensing wheels (5) and
- a wheel changer unit (3) which interacts functionally with the changer magazine (1) and the sensing wheels (5) such that, by means of the wheel changer unit (3), the exchange wheel (5) is removed from the changer magazine (1) and placed on the axle of the sensing wheel arm (13), wherein
- the unlocking of the sensing wheel (5) is carried out from the axle of the sensing wheel arm (13) during pivoting up of the sensing wheel (5) for removal of the sensing wheel (5) and the locking of the new sensing wheel (5) is carried out at the latest during lowering.

5. Sensing wheel changer device according to Claim 4, **characterized in that** the wheel changer unit (3) is a gripper, the jaws of which can be adjusted with respect to one another so that they can engage on the rim of the sensing wheel (5) in the changer magazine (1).

6. Sensing wheel changer device according to Claim 4 or 5, **characterized in that** a trapping fork (2) for holding the sensing wheel arm (13) is integrated in a wheel change position.

7. Sensing wheel changer device according to Claim 6, **characterized in that** the trapping fork (2) is preferably arranged centrally between the two sensing wheels (5) and the sensing wheels (5) themselves are pivotable into this central position.

8. Sensing wheel changer device according to one of Claims 4 to 6, **characterized in that** the number of sensing wheel arms (13) can be increased from two to more.

9. Sensing wheel changer device according to one of Claims 4 to 8, **characterized in that** the sensing wheel magazine (1) has an edge on which the ball lock pin (7) is unlocked during pivoting up of the sensing wheel (5), as a result of which the two balls which fix the sensing wheel (5) otherwise on the axle are lowered and the sensing wheel (5) lies freely on the axle of the sensing wheel arm (13).

10. Sensing wheel changer device according to one of Claims 4 to 9, **characterized in that**, if the sensing wheel arm (13) is lowered again, the pressure on the trigger mechanism of the ball lock pin (7) is removed and the new sensing wheel (5') is locked.

11. Sensing wheel changer device according to one of Claims 4 to 10, **characterized in that** the changer magazine (1) possesses a cover which can fold up and down.

12. Object or vehicle (11) with a sensing wheel jettison device according to one of Claims 1 to 3 and a sensing wheel changer device according to one of Claims 4 to 11.

## Revendications

1. Système de largage de roue de détection, comprenant un bras de roue de détection (13), un axe fixé au bras de roue de détection (13) et une roue de détection (5) fixée sur l'axe de manière à pouvoir être bloquée et libérée, ainsi qu'un dispositif de largage de roue de détection, **caractérisé en ce que** le dispositif de largage de roue de détection comprend un moyen (7) qui comprend un mécanisme fonctionnant de manière autonome pour bloquer et libérer de manière automatique la roue de détection (5), et **en ce que** la roue de détection (5) est bloquée automatiquement sur le bras de roue de détection (13) au moyen du mécanisme et peut être automatiquement libérée du bras de roue de détection (13) et larguée à partir de celui-ci.

2. Système de largage de roue de détection selon la revendication 1, **caractérisé en ce que** le moyen (7) est un boulon de blocage à billes.

3. Système de largage de roue de détection selon la revendication 1, **caractérisé en ce que** le moyen (7) est un moyen de commutation ou de pression déclenché de manière magnétique/électromagnétique.

4. Dispositif de remplacement de roue de détection, comprenant un dispositif de largage de roue de détection selon l'une quelconque des revendications 1 à 3, **caractérisé par**
- un magasin de remplacement (1) pourvu de roues de détection de remplacement (5') ainsi que
- une unité de remplacement de roue (3) qui coopère de manière fonctionnelle avec le magasin de remplacement (1) et les roues de détection (5) de telle sorte que la roue de remplacement (5') soit retirée du magasin de remplacement (1) par l'unité de remplacement de roue (3) et placée sur l'axe du bras de roue de détection (13),
- le déverrouillage de la roue de détection (5) de l'axe du bras de roue de détection (13) s'effectuant lors du pivotement vers le haut de la roue de détection (5) pour enlever la roue de détection (5) et le blocage de la nouvelle roue de détection (5') s'effectuant au plus tard lors de l'abaissement.

5. Dispositif de remplacement de roue de détection selon la revendication 4, **caractérisé en ce que** l'unité de remplacement de roue (3) est un dispositif de préhension dont les mâchoires peuvent être déplacées l'une par rapport à l'autre, de telle sorte qu'elles puissent venir en prise avec la jante de la roue de détection (5') dans le magasin de remplacement (1).

6. Dispositif de remplacement de roue de détection selon la revendication 4 ou 5, **caractérisé en ce qu'**une fourche de retenue (2) pour maintenir le bras de roue de détection (13) dans une position de remplacement de roue est prévue.

7. Dispositif de remplacement de roue de détection selon la revendication 6, **caractérisé en ce que** la fourche de retenue (2) est disposée de préférence de manière centrale entre les deux roues de détection (5) et les roues de détection (5) elles-mêmes peuvent être pivotées dans cette position centrale.

8. Dispositif de remplacement de roue de détection selon l'une quelconque des revendications 4 à 6, **caractérisé en ce que** le nombre des bras de roue de détection (13) peut être augmenté de deux à plus de deux.

9. Dispositif de remplacement de roue de détection selon l'une quelconque des revendications 4 à 8, **caractérisé en ce que** le magasin de roues de détection (1) comprend un bord sur lequel le boulon de blocage à billes (7) est déverrouillé lors du pivotement vers le haut de la roue de détection (5), de sorte que les deux billes, qui autrement retiennent la roue de détection (5) sur l'axe, soient abaissées et que la roue de détection (5) repose librement sur l'axe du bras de roue de détection (13).

10. Dispositif de remplacement de roue de détection selon l'une quelconque des revendications 4 à 9, **caractérisé en ce que**, lorsque le bras de roue de détection (13) s'abaisse à nouveau, la pression sur le mécanisme de déclenchement du boulon de blocage à billes (7) est supprimée et la nouvelle roue de détection (5') est bloquée.

11. Dispositif de remplacement de roue de détection selon l'une quelconque des revendications 4 à 10, **caractérisé en ce que** le magasin de remplacement (1) possède un couvercle qui peut être pivoté vers le haut ou vers le bas.

12. Objet ou véhicule (11) comprenant un dispositif de largage de roue de détection selon l'une quelconque des revendications 1 à 3 ainsi qu'un dispositif de remplacement de roue de détection selon l'une quelconque des revendications 4 à 11.
